# EUROPÄISCHE PATENTSCHRIFT

(11) **EP 3 786 738 B1**
(45) Veröffentlichungstag und Bekanntmachung des Hinweises auf die Patenterteilung: **03.07.2024**
(21) Anmeldenummer: 19193817.4
(22) Anmeldetag: 27.08.2019
(51) Int. Cl.: G05B 19/4155, G05B 19/409, B25F 5/02

(54) **VERFAHREN ZUM OPTIMIERTEN ARBEITEN MIT EINER WERKZEUGMASCHINE**
METHOD FOR OPTIMISED WORKING WITH A MACHINE TOOL
PROCÉDÉ DE TRAVAIL OPTIMISÉ AVEC UNE MACHINE-OUTIL

(43) Veröffentlichungstag der Anmeldung: 03.03.2021
(73) Patentinhaber: Hilti Aktiengesellschaft, 9494 Schaan (LI)
(72) Erfinder: Schaefer, Martin, 6858 Schwarzach (AT); Sattler, Christian, 87640 Biessenhofen (DE); Vida, Gabor, 7000 Chur (CH)
(74) Vertreter: Hilti Aktiengesellschaft Corporate Intellectual Property

(56) Entgegenhaltungen:
- WO-A1-2005/070624
- DE-A1- 3 930 457
- GB-A- 2 387 050
- JP-A- H10 286 772
- US-A1- 2016 167 186

## Beschreibung

Die vorliegende Erfindung betrifft ein Verfahren zum optimierten Arbeiten mit einer Werkzeugmaschine, wobei die Werkzeugmaschine von einem Nutzer zu einem Zeitpunkt t während ihres Betriebs mit einem Kontaktdruck p(t) an einen Untergrund gedrückt wird. Ein Grundgedanke, der der Erfindung zugrunde liegt, besteht darin, dass der Kontaktdruck mit einer Normalverteilung verglichen wird, wobei aus diesem Vergleich eine Empfehlung für den zukünftig anzuwendenden Kontaktdruck abgeleitet und auf einem Anzeigemittel angezeigt wird. Auf Grundlage dieser Empfehlung können Nutzer ein optimiertes Arbeitsverhalten mit der Werkzeugmaschine erlernen oder trainieren. Vorarbeiter können das Verfahren verwenden, um den Umgang der ihnen unterstellten Werkzeugmaschinen-Nutzer zu verbessern. Dazu kann beispielsweise der Fokus auf die Performance der Werkzeugmaschine gelegt werden oder auf eine Reduzierung des Verschleißes.

### Stand der Technik:

Es ist mittlerweile üblich, dass Werkzeugmaschinen mit einem Anzeigemittel, wie einem Display, ausgestattet sind. Auf diesem Display können beispielsweise Informationen, die für den Betrieb der Werkzeugmaschine relevant sind, angezeigt werden. Einige Hersteller zeigen beispielsweise auf einem Display, das an der Werkzeugmaschine angeordnet vorliegt, einen Leistungsindikator an. Dieser kann dem Nutzer der Werkzeugmaschinen einen Hinweis geben, ob die Werkzeugmaschine im optimalen Leistungsbereich verwendet wird. Ein möglicher Leistungsindikator kann zum Beispiel der Kontaktdruck sein, mit dem die Werkzeugmaschine in einen zu bearbeitenden Untergrund gedrückt wird. Darüber hinaus werden bei einigen Herstellern Empfehlungen für die weitere Arbeit des Nutzers gegeben. Beispielsweise kann angezeigt werden, dass der Leistungsindikator in einem zu geringen oder einem zu hohen Bereich liegt. Mit dieser Anzeige kann eine Empfehlung einhergehen, beispielsweise den Kontaktdruck auf die Werkzeugmaschine zu erhöhen oder zu reduzieren. Der Nutzer kann dann sein Arbeitsverhalten dergestalt ändern, dass ein optimaler Leistungsbereich, der von einem Leistungsindikator im optimalen Bereich gekennzeichnet wird, erreicht wird.

Beispielsweise offenbart die WO 2005 070 624 A1 ein Elektro-Handwerkzeug, bei dem eine den Anpressdruck des Werkzeugs auf ein Werkstück erfassende Sensoreinheit mit einem Signalgeber zusammenwirkt.

US 2016 167 186 A1 beschreibt ein Elektrowerkzeug mit einem Körper, einem Motor, einem Sensor und einem Prozessor, wobei der Sensor ist mit dem Körper verbunden und so konfiguriert ist, dass er Daten bezüglich einer Materialeigenschaft eines Werkstücks erfassen kann. Der Prozessor ist so konfiguriert, dass er einen Betriebsparameter des Elektrowerkzeugs basierend auf den erfassten Daten steuert.

JP H10 286 772 A offenbart ein Schleif oder Poliergerät, das während der Arbeit bewegt und mit einem Arbeitsdruck auf die zu bearbeitende Oberfläche gedrückt wird.

Nachteilig an diesen Anzeigen und Empfehlungen ist es, dass sie keine Aussage darüber treffen, wie das Arbeitsverhalten des Nutzers langfristig verbessert werden kann, beispielsweise im Hinblick auf ein Bohrloch, eine Baustelle oder eine beliebige Zeitdauer. Der Nutzer erhält durch die konventionellen Hinweise und Empfehlungen, wie sie aus dem Stand der Technik bekannt sind, keine Handhabung, wie er seinen Umgang mit der Werkzeugmaschine langfristig optimieren kann. Darüber hinaus wäre es wünschenswert, wenn dem Nutzer Informationen darüber zur Verfügung gestellt werden könnten, wie sich sein Arbeitsverhalten im Vergleich zu einer normierten Arbeitsverhalten verhält. Der Nutzer kann dadurch eine objektive Rückmeldung zu seinem Umgang mit der Werkzeugmaschine erhalten und durch diese Kenntnis sein Verhalten optimieren.

Aufgabe der vorliegenden Erfindung ist es somit, die vorstehend beschriebene Nachteile und Mängel des Standes der Technik zu überwinden und ein Verfahren zum optimierten Arbeiten mit einer Werkzeugmaschine bereitzustellen, mit dem ein Nutzer Informationen darüber erhält, wie er sein Arbeitsverhalten mit einer Werkzeugmaschine langfristig verbessern kann. Insbesondere sollen dem Nutzer Informationen zu einem Durchschnitts-Arbeitsverhalten zugänglich gemacht bzw. angezeigt werden, so dass der Nutzer sein Arbeitsverhalten mit dem Durchschnitts-Arbeitsverhalten vergleichen und Optimierungspotential ableiten kann.

Die Aufgabe wird durch den Gegenstand des unabhängigen Anspruchs gelöst. Vorteilhafte Ausführungsformen zu dem Gegenstand des unabhängigen Anspruchs finden sich in den abhängigen Unteransprüchen.

### Beschreibung der Erfindung:

Die Aufgabe wird gelöst durch ein Verfahren zum optimierten Arbeiten mit einer Werkzeugmaschine, wobei die Werkzeugmaschine von einem Nutzer zu einem Zeitpunkt t während ihres Betriebs mit einem Kontaktdruck p(t) an einen Untergrund gedrückt wird. Das wird in den beigefügten Ansprüchen definiert und umfasst die folgenden Schritte:
S1) Indirekte Bestimmung des Kontaktdrucks p(t) unter Verwendung einer Stromaufnahme der Werkzeugmaschine,
S2) Aufaddieren der indirekt bestimmten Werte für den Kontaktdruck p(t), wobei für die Ermittlung des Kontaktdrucks p(t) die Daten und Werte eines Tageszählers verwendet werden, welcher jeweils für einen Arbeitstag verschiedene Betriebsparameter der Werkzeugmaschine erfasst, und wobei bestimmt werden kann, welcher Betriebszeitraum betrachtet soll,
S3) Vergleich der aufaddierten Kontaktdruckwerte p_{ad}(t) mit einer Normalverteilung, wobei die Normalverteilung durch Vergleichsmessungen an einer Vielzahl von vergleichbaren Geräten ermittelt wird,
S4) Ermittlung einer Empfehlung für einen anzuwendenden Kontaktdruck p(t),
S5) Anzeige der aufaddierten Kontaktdruckwerte p_{ad}(t) und der Empfehlung für den anzuwendenden Kontaktdruck p(t).

Bei dem Untergrund, an den die Werkzeugmaschine gedrückt wird, kann es sich um einen Untergrund im Sinne eines Bodens oder eines Erdbodens oder dergleichen handeln. Der Begriff kann aber auch in dem Sinne verstanden werden, dass die Werkzeugmaschine dazu verwendet wird, eine Wand oder eine Decke zu bearbeiten. Es ist im Sinne der Erfindung insbesondere bevorzugt, dass das Werkzeug der Werkzeugmaschine gegen den Untergrund gedrückt wird und dass während des Betriebs der Werkzeugmaschine der Kontaktdruck, mit dem das Werkzeug im Betrieb der Werkzeugmaschine gegen den Untergrund gedrückt wird, ermittelt wird.

Bei den Betriebsparametern, die zur Bestimmung des Kontaktdrucks p(t) verwendet werden, handelt es sich vorzugsweise um aktuelle Betriebsparameter der Werkzeugmaschine, mit denen der Betrieb der Werkzeugmaschine zu einem jeweiligen Zeitpunkt t beschrieben werden kann. Dabei kann es sich beispielsweise um eine Geschwindigkeit handeln, mit der das Werkzeug der Werkzeugmaschine rotiert. Es ist im Sinne der Erfindung insbesondere bevorzugt, dass als Betriebsparameter direkt an der Werkzeugmaschine erfassbare Messwerte verwendet werden. Es kann allerdings ebenso bevorzugt sein, dass für die Ermittlung des Kontaktdrucks abgeleitete Werte verwendet werden, die beispielsweise aus den direkt an der Werkzeugmaschine gemessenen Werten berechnet oder abgeleitet werden. Es ist erfindungsgemäß vorgesehen, dass die Stromaufnahme der Werkzeugmaschine als Betriebsparameter verwendet wird. Die Stromaufnahme der Werkzeugmaschine wird zu einem Zeitpunkt t gemessen und der Kontaktdruck p(t) für diesen Zeitpunkt unter Verwendung des ermittelten Stromaufnahmewertes bestimmt. Dieses Vorgehen kann im Sinne der Erfindung auch als indirekte Bestimmung des Anpressdrucks p(t) bezeichnet werden. Die Begriffe "Anpressdruck" und "Kontaktdruck" werden im Sinne der Erfindung synonym verwendet. Es ist im Sinne der Erfindung insbesondere bevorzugt, dass die Betriebsparameter unter Verwendung von Sensoren erhoben werden. Beispielsweise können Drucksensoren verwendet werden, um Messwerte aufzunehmen, mit denen der Kontaktdruck p(t) direkt oder indirekt ermittelt werden kann.

Beispielsweise können Empfehlungen zum Erhöhen oder Reduzieren des Anpressdrucks gegeben werden, wenn eine Abweichung der ermittelten Werte zum jeweiligen Normbereich von mehr als 4 % vorliegt. Diese Empfehlung kann beispielsweise in grafischer Form, beispielsweise durch einen nach oben oder durch einen nach unten zeigenden Pfeil, gegeben werden. Es ist im Sinne der Erfindung besonders bevorzugt, dass die Empfehlung an einer Anzeigevorrichtung der Werkzeugmaschine ausgegeben wird. Beispielsweise kann die vorzugsweise grafische Empfehlung neben den ermittelten Kontaktdruckwerten angezeigt werden. Bei der Anzeigevorrichtung kann es sich zum Beispiel um einen Bildschirm oder um ein Display handeln.

Es ist erfindungsgemäß vorgesehen, dass für die Ermittlung des Kontaktdrucks p(t) die Daten und Werte eines Tageszählers verwendet werden, welcher jeweils für einen Arbeitstag verschiedene Betriebsparameter der Werkzeugmaschine erfasst, und wobei bestimmt werden kann, welcher Betriebszeitraum betrachtet soll. Vorzugsweise können auch für die Anzeige der Werte insbesondere die Daten und Werte eines Tageszählers verwendet werden. Der Tageszähler kann ein Sensor sein, der jeweils für einen Arbeitstag verschiedene Betriebsparameter der Werkzeugmaschine erfasst. Dabei kann es sich beispielsweise um die Betriebszeit der Maschine handeln oder um die Verläufe verschiedener Größen, die den Betrieb der Werkzeugmaschine charakterisieren. Vorzugsweise kann der Nutzer der Werkzeugmaschine durch Betätigen eines Schalters bestimmen, welcher Betriebszeitraum betrachtet werden soll. Bei dem Schalter kann es sich zum Beispiel um einen Reset-Knopf handeln.

Es stellt einen wesentlichen Vorteil des vorgeschlagenen Verfahrens dar, dass der Nutzer nunmehr in die Lage versetzt wird, sein Arbeitsverhalten mit der Werkzeugmaschine zu üben bzw. zu trainieren. Beispielsweise kann er sein Arbeitsverhalten in Bezug auf den Kontaktdruck, den er in verschiedenen Arbeitssituationen anwendet, optimieren. Dies kann beispielweise mit dem Ziel erfolgen, schneller zu bohren. Ein anderes Verbesserungsziel kann darin bestehen, den Verschleiß an einem Werkzeug der Werkzeugmaschine zu reduzieren. Wenn es sich bei der Werkzeugmaschine beispielsweise um ein Diamant-Bohrgerät handelt, kann die Erfindung vorteilhafterweise dazu verwendet werden, den Nutzer in die Lage zu versetzen, schneller Bohrlöcher fertigzustellen oder den Verschleiß an der Bohrkrone zu reduzieren. Die Erfindung kann selbstverständlich auch für alle anderen Arten von Werkzeugmaschinen, beispielsweise Schleifmaschinen, verwendet werden.

Die Erfindung kann beispielsweise auch von Vorarbeitern verwendet werden, um eine Gruppe von ihnen unterstellten Werkzeugmaschinen-Nutzern zu schulen. Vorteilhafterweise können Vorarbeiter mit der Erfindung das Arbeitsverhalten ihrer Mitarbeiter beeinflussen, um deren Effizienz und das individuelle Arbeitsverhalten zu optimieren.

Um die erhobenen Daten, insbesondere die Kontaktdruckdaten, optimal auswerten und verarbeiten zu können, ist es im Sinne der Erfindung bevorzugt, dass in der Werkzeugmaschine eingestellt werden kann oder von der Werkzeugmaschine selbst ermittelt wird, welcher Gang in der Werkzeugmaschine eingelegt ist, was für ein Werkzeug verwendet wird bzw. ob von Hand oder unter Verwendung eines Bohrständers gebohrt wird. Die Eingabe dieser Daten kann beispielsweise unter Verwendung eines Displays der Werkzeugmaschine erfolgen, das als Anzeigemittel verwendet wird. Das Display kann beispielsweise auch als Berührungsbildschirm bzw. als Touch-Display ausgebildet sein, so dass es vorteilhafterweise auch als Eingabemittel verwendet werden kann.

Es ist erfindungsgemäß vorgesehen, dass die Normalverteilung, mit der die aufaddierten Kontaktdruckwerte verglichen werden, durch Vergleichsmessungen an einer Vielzahl von vergleichbaren Geräten ermittelt wird. Diese und ähnliche Daten können unter Verwendung einer entsprechenden Sensorik in den Werkzeugmaschinen ermittelt und ausgewertet werden. Beispielsweise können die Daten, die vorzugsweise nicht personalisiert erhoben werden, an eine Auswertungsstelle übermittelt werden, bei der die Daten verschiedener Werkzeugmaschinen zusammengetragen werden. Es kann im Sinne der Erfindung ebenso bevorzugt sein, dass die Daten zunächst in der Werkzeugmaschine gespeichert werden und zu einem späteren Zeitpunkt ausgelesen werden. Dies kann beispielsweise im Rahmen einer Wartung erfolgen oder wenn die Werkzeugmaschine an den Hersteller zurückgegeben wird. Es können auch die bisher bereits erhobenen Daten, die zur Ermittlung des Leistungsindikators genutzt werden, verwendet werden, um den Vergleich der aufaddierten Kontaktdruckwerte mit der Normalverteilung zu ermöglichen.

Es ist erfindungsgemäß vorgesehen, dass die Normalverteilung durch Vergleichsmessungen an einer Vielzahl von vergleichbaren Geräten ermittelt wird. Die Ergebnisse dieser Vergleichsmessungen können an einer zentralen Stelle gesammelt und ausgewertet werden. Sie können dann bei geeigneter Gelegenheit an einzelne Werkzeugmaschinen überspielt werden. Dies kann beispielsweise im Rahmen einer Wartung des Geräts oder bei einem Software-Update geschehen. Es ist im Sinne der Erfindung insbesondere bevorzugt, dass die Normalverteilung in der Werkzeugmaschine gespeichert ist. Dazu kann die Werkzeugmaschine entsprechende Speichermittel umfassen.

Es ist im Sinne der Erfindung der bevorzugt, dass die Normalverteilung durch die Auswertung von Test-Messungen ermittelt wird. Um die Test-Ergebnisse zu erhalten, werden beispielsweise erfahrene Anwender der Werkzeugmaschine gebeten, entsprechend eines standardisierten Test-Profils die Werkzeugmaschine zu bedienen, beispielsweise indem die Werkzeugmaschine zum Bohren von Löchern verwendet wird. Dabei werden insbesondere die Stromaufnahmewerte der Werkzeugmaschinen bei Betrieb in dem Test-Profil ermittelt. Vorzugsweise können die Stromwerte aufaddiert und als so erhaltene Normalverteilung in den Werkzeugmaschinen hinterlegt werden. Vorzugsweise können die Normalverteilungswerte in einer Gerätesoftware der Werkzeugmaschine gespeichert werden.

Es ist im Sinne der Erfindung bevorzugt, dass der Vergleich der aufaddierten Kontaktdruckwerte in drei Kontaktdruckbereichen erfolgt. Dabei kann es sich beispielsweise um einen zu geringen, einen optimalen und einen zu hohen Wertebereich für den Kontaktdruck handeln.

Vorzugsweise ist die Werkzeugmaschine dazu eingerichtet, während des Betriebs ein Betriebsprofil zu ermitteln. Dieses Profil kann in ein relatives Profil umgewandelt werden, wobei sich die Profile beispielsweise aus drei Prozentzahlen zusammensetzen können. Vorzugsweise kann jede Prozentzahl einem Kontaktdruckbereich zugeordnet werden. Das Profil kann dann beispielsweise folgende Form aufweisen: 20%/39%/41 %, wobei der Prozentwert 20 % einem ersten Kontaktdruckbereich zugeordnet werden kann, der Prozentwert von 39% einem zweiten Prozentwert und der Prozentwert von 41% einem dritten Kontaktdruckbereich. Die Kontaktdruckbereiche können vorzugsweise einer zu geringen, einer optimalen und einer zu hohen Anpresskraft entsprechen, wobei diese Kontaktdruckbereiche beispielsweise mit den Farben gelb, grün und rot gekennzeichnet werden können. Es ist im Sinne der Erfindung insbesondere bevorzugt, dass die Zahlen eine Verteilung in % wiedergeben. Vorzugsweise wird das ermittelte Betriebsprofil mit Vorgabewerten, wie der ermittelten Normalverteilung verglichen. Eine mögliche Normalverteilung kann beispielsweise 30%/60%/40% lauten. Vorzugsweise wird dann auf Grundlage der Differenzen zwischen dem ermittelten Betriebsprofil und der Normalverteilung die Empfehlung für eine Veränderung oder Anpassung des Kontaktdrucks ermittelt und beispielsweise grafisch über einen Bildschirm der Werkzeugmaschine ausgegeben.

Es ist im Sinne der Erfindung bevorzugt, dass die Anzeige der Empfehlung für den anzuwendenden Kontaktdruck p(t) mit einem Pfeil erfolgt. Beispielsweise kann ein auf dem Display der Werkzeugmaschine nach oben deutender Pfeil bedeuten, dass der Nutzer den Kontaktdruck erhöhen soll. Dementsprechend kann ein auf dem Display der Werkzeugmaschine nach unten deutender Pfeil bedeuten, dass der Kontaktdruck, mit dem der Nutzer die Werkzeugmaschine an die zu bearbeitende Wand oder in den zu bearbeitenden Unterdruck drückt, reduziert werden soll. Ein horizontaler Pfeil oder die Abwesenheit eines Pfeils kann beispielsweise bedeuten, dass der Nutzer mit der Werkzeugmaschine im optimalen Leistungsbereich arbeitet.

Weitere Vorteile der Erfindung ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:

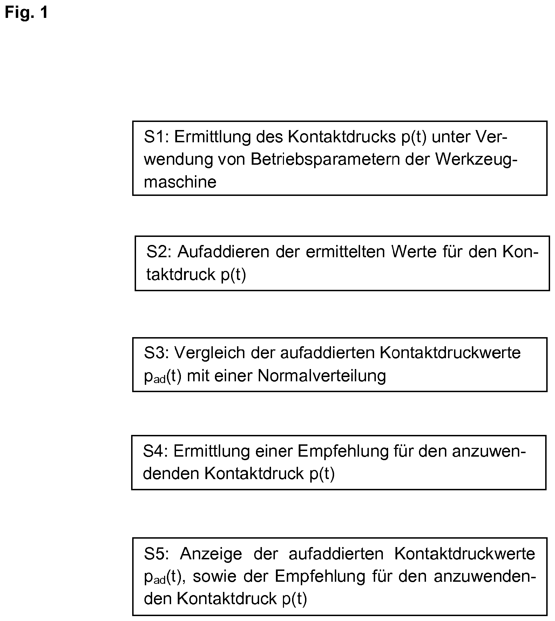

- Fig. 1: Ansicht einer bevorzugten Ausführungsform des vorgeschlagenen Verfahrens

Figur 1 zeigt den Ablauf einer bevorzugten Ausführungsform des vorgeschlagenen Verfahrens.

## Patentansprüche

1. Verfahren zum optimierten Arbeiten mit einer Werkzeugmaschine, wobei die Werkzeugmaschine von einem Nutzer zu einem Zeitpunkt t während ihres Betriebs mit einem Kontaktdruck p(t) an einen Untergrund gedrückt wird,
**umfassend die folgenden Schritte:**
S1) Indirekte Bestimmung des Kontaktdrucks p(t) unter Verwendung einer Stromaufnahme der Werkzeugmaschine,
S2) Aufaddieren der indirekt bestimmten Werte für den Kontaktdruck p(t), wobei für die Ermittlung des Kontaktdrucks p(t) die Daten und Werte eines Tageszählers verwendet werden, welcher jeweils für einen Arbeitstag verschiedene Betriebsparameter der Werkzeugmaschine erfasst, und wobei bestimmt werden kann, welcher Betriebszeitraum betrachtet soll,
S3) Vergleich der aufaddierten Kontaktdruckwerte p_{ad}(t) mit einer Normalverteilung, wobei die Normalverteilung durch Vergleichsmessungen an einer Vielzahl von vergleichbaren Geräten ermittelt wird,
S4) Ermittlung einer Empfehlung für einen anzuwendenden Kontaktdruck p(t),
S5) Anzeige der aufaddierten Kontaktdruckwerte p_{ad}(t), sowie der Empfehlung für den anzuwendenden Kontaktdruck p(t).

2. Verfahren nach Anspruch 1,
wobei die Normalverteilung in der Werkzeugmaschine gespeichert ist.

3. Verfahren nach Anspruch 1 oder 2,
wobei der Vergleich der aufaddierten Kontaktdruckwerte in drei Kontaktdruckbereichen erfolgt.

## Claims

1. Method for optimized working with a machine tool, wherein the machine tool is pressed onto a substrate by a user with a contact pressure p(t) at a time t during its operation,
**comprising the following steps:**
S1) indirectly determining the contact pressure p(t) using a power consumption of the machine tool,
S2) adding the indirectly determined values for the contact pressure p(t), wherein the data and values from a day counter are used to determine the contact pressure p(t), which day counter respectively records different operating parameters of the machine tool for a working day, and wherein it is possible to determine which operating period should be considered,
S3) comparing the added contact pressure values p_{ad}(t) with a normal distribution, wherein the normal distribution is determined by means of comparative measurements on a multiplicity of comparable devices,
S4) determining a recommendation for a contact pressure p(t) to be applied,
S5) displaying the added contact pressure values p_{ad}(t) and the recommendation for the contact pressure p(t) to be applied.

2. Method according to Claim 1, wherein the normal distribution is stored in the machine tool.

3. Method according to Claim 1 or 2, wherein the added contact pressure values are compared in three contact pressure ranges.

## Revendications

1. Procédé de travail optimisé avec une machine-outil, dans lequel la machine-outil est poussée contre un support par un utilisateur à un instant t pendant son fonctionnement avec une pression de contact p(t),
comprenant les étapes suivantes consistant à :
S1) déterminer indirectement la pression de contact p(t) en utilisant une puissance absorbée de la machine-outil,
S2) additionner les valeurs déterminées indirectement pour la pression de contact p(t), dans lequel on utilise pour l'établissement de la pression de contact p(t) les données et les valeurs d'un compteur journalier qui détecte respectivement pour une journée de travail différents paramètres de fonctionnement de la machine-outil, et dans lequel on peut déterminer quelle période de fonctionnement est à prendre en considération,
S3) comparer les valeurs de pression de contact p_{ad}(t) additionnées avec une distribution normale, dans lequel la distribution normale est établie par des mesures comparatives sur une pluralité d'appareils comparables,
S4) établir une recommandation pour une pression de contact p(t) à exercer,
S5) afficher les valeurs de pression de contact p_{ad}(t) additionnées ainsi que la recommandation pour la pression de contact p(t) à exercer.

2. Procédé selon la revendication 1, dans lequel la distribution normale est mémorisée dans la machine-outil.

3. Procédé selon la revendication 1 ou 2, dans lequel la comparaison des valeurs de pression de contact additionnées est effectuée dans trois plages de pression de contact.
